(19) Europäisches Patentamt

European Patent Office

Office européen des brevets

(11) **EP 0 626 225 B1**

(12) **FASCICULE DE BREVET EUROPEEN**

(45) Date de publication et mention de la délivrance du brevet:
**13.08.1997 Bulletin 1997/33**

(51) Int. Cl.$^6$: **B23B 31/12**, B23B 31/30, B23B 31/40, B23B 33/00

(21) Numéro de dépôt: **94401083.4**

(22) Date de dépôt: **16.05.1994**

(54) **Dispositif de transmission différentielle de force et de course pour un appareil de maintien de pièces mécaniques**

Differenzierte Kraft- und Wegtransmissionsvorrichtung eines Spanngerätes für mechanische Werkstücke

Device for differential transmission of force and course for a clamping device for mechanical pieces

(84) Etats contractants désignés:
**DE ES GB IT**

(30) Priorité: **25.05.1993 FR 9306201**

(43) Date de publication de la demande:
**30.11.1994 Bulletin 1994/48**

(73) Titulaire: **SANDVIK TOBLER S.A.**
**F-95380 Louvres (FR)**

(72) Inventeur: **Barbieux, Jacques Lucien**
**F-95380 Louvres (FR)**

(74) Mandataire: **Lhuillier, René et al**
**Cabinet Lepeudry,**
**52, avenue Daumesnil**
**75012 Paris (FR)**

(56) Documents cités:
GB-A- 1 068 144          GB-A- 1 133 928
GB-A- 1 377 365          US-A- 1 829 619
US-A- 1 900 934          US-A- 2 909 955
US-A- 2 984 493          US-A- 3 484 809

## Description

L'invention concerne un dispositif de transmission différentielle de force et de course selon le préambule de la revendication 1. Un tel dispositif est connû du document US-A-1 900 934.

Le problème que vise à résoudre l'invention est de proposer un dispositif du genre précité, qui permette de contrôler précisément la valeur des forces effectivement transmises aux différents moyens à commander.

Selon l'invention, lesdits moyens moteurs présentent une surface de transmission par laquelle ils communiquent une force auxdits moyens de compensation, ceux-ci comprenant au moins un bloc, monté mobile le long de ladite surface de transmission et prenant appui sur celle-ci, lesdits premiers et seconds moyens à commander présentant respectivement deux surfaces de transmission juxtaposées l'une à l'autre, chacune présentant, par rapport à la surface de transmission des moyens moteurs, une orientation déterminée qui est fonction de la force à transmettre respectivement auxdits premiers et seconds moyens à commander, ledit bloc étant en contact avec chacune des surfaces de transmisssion des moyens à commander. Ainsi, les moyens de compensation sont constitués par au moins un bloc, c'est-à-dire un élément mécanique indéformable qui permet, en ajustant la position des surfaces des moyens à commander avec lesquelles il coopère, de contrôler précisément les forces transmises, et ce de manière reproductible.

D'autres détails et avantages de l'invention apparaîtront au cours de la description suivante de quelques formes de réalisation préférées mais non limitatives, en regard des dessins annexés, sur lesquel :

la figure 1 est une vue en coupe longitudinale d'un mandrin de serrage de pièce incorporant le dispositif de transmission selon l'invention, les deux parties de la figure situées de part et d'autre de l'axe du mandrin étant des coupes selon deux plans perpendiculaires entre eux ;
la figure 2 est une vue de détail de la figure 1, montrant le dispositif de transmission, en coupe selon la ligne II-II de la figure 3 ;
la figure 3 est une vue de face de la couronne selon l'invention, équipée des coins, selon la ligne III-III de la figure 2 ;
la figure 4 est une vue en perspective d'un coin selon l'invention ;
les figures 5a et 5b représentent un détail de la figure 3, dans deux positions différentes de fonctionnement ;
la figure 5c est une vue de face d'un coin à faces planes ;
la figure 5d est une vue en perspective d'un cône faisant office de coin ;
la figure 5e est une vue analogue à la figure 5b, le coin étant étant remplacé par une bille ;
la figure 6 est une vue partielle de la figure 1, dans une position différente de fonctionnement ; et
les figures 7 à 15 représentent schématiquement des variantes de réalisation de l'invention.

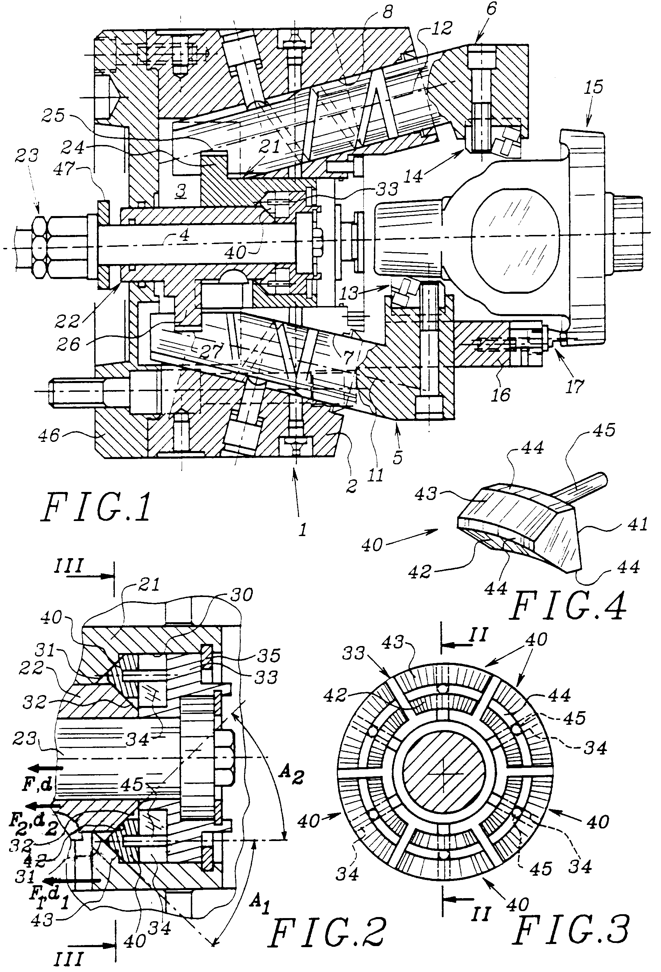

Le mandrin 1 représenté sur la figure 1 comprend de façon connue en soi un corps 2 présentant une cavité centrale 3 s'étendant le long d'un axe 4 du mandrin et dans laquelle font saillie quatre extrémités de quatre bras 5, 6. Ces bras comprennent deux bras courts 5 et deux bras longs 6 cylindriques, diamétralement opposés deux à deux par rapport à l'axe 4 du mandrin, les bras courts étant situés dans un plan général perpendiculaire au plan général des bras longs 6 : ainsi, la figure 1 ne montre qu'un seul bras court 5 et un seul bras long 6 et la description suivante ne portera que sur ces deux-ci. Le bras court 5 et le bras long 6 sont montés à coulissement longitudinal dans deux trous traversants 7, 8 s'étendant selon deux axes 11, 12 inclinés par rapport à l'axe 4 du mandrin et convergeant vers la cavité centrale 3 du corps 2. A chaque extrémité des bras 5, 6 disposée à l'extérieur du corps 2, est monté un élément de mâchoire 13, 14 respectivement, destiné à s'appliquer contre une pièce 15 à maintenir. Dans cet exemple, il est prévu aussi un troisième bras 16 qui est fixe et s'étend parallèlement à l'axe 4 du mandrin : il porte, à une extrémité libre, des moyens de butée 17 sur lesquels prend appui la pièce 15. Un autre bras fixe, non visible sur la figure 1, est disposé de façon diamétralement opposée au bras fixe 16.

Les moyens de manoeuvre des bras 5, 6 sont présentés ci-après. Ils comprennent essentiellement un tube de manoeuvre extérieur 21, un tube de manoeuvre intérieur 22, et une tige de commande 23. Le tube de manoeuvre extérieure 21 coulisse de façon ajustée dans la cavité centrale 3 du corps 2 selon l'axe 4 du mandrin et porte un doigt 24 faisant saillie radialement sur sa surface extérieure et reçu à coulissement radial dans un logement 25 prévu à l'extrémité du bras long 6 située dans la cavité centrale 3 du corps. Le tube de manoeuvre intérieur 22 est de constitution semblable à celle du tube de manoeuvre extérieur 21 et coopère, par un doigt 26, avec un logement 27 du bras court 5 : il est monté à l'intérieur du tube de manoeuvre extérieur 21 de façon à coulisser avec ajustement. Enfin, la tige de commande 23 est montée avec ajustement dans le tube de manoeuvre intérieur 22 de façon à pouvoir coulisser dans celui-ci.

Du côté de la pièce 15, le tube de manoeuvre extérieur 21 s'étend au-delà du tube de manoeuvre intérieur 22 et présente une portion de surface intérieure 30 de diamètre supérieur à la partie restante du tube, raccordée à celle-ci par une surface conique 31 (figure 2). Par ailleurs, le tube de manoeuvre intérieur 22 porte, à une extrémité voisine amincie, une surface conique 32. A une extrémité de la tige de commande 23 située dans la cavité centrale 3 du corps, est fixée une couronne 33 logée dans l'extrémité voisine du tube de manoeuvre extérieur 21 et présente à cet effet un diamètre extérieur un peu inférieur au diamètre de la portion de surface intérieure 30 de celui-ci. La couronne 33 présente six fentes 34 s'étendant radialement et débouchant d'une part sur une surface latérale de la couronne et d'autre part sur une surface d'extrémité tournée vers le tube de manoeuvre intérieur 22. Elle est maintenue à l'intérieur de l'extrémité du tube de manoeuvre extérieur 21 par un circlips 35.

Dans un espace ménagé entre l'extrémité du tube de manoeuvre intérieur 22 et la couronne 33, sont disposés six coins 40 (figures 2 à 4), chacun présentant, vu en section transversale, une forme générale triangulaire définie par une face de base 41 et deux faces inclinées 42, 43, les faces étant reliées les unes aux autres par des chanfreins 44. Dans cet exemple, chaque coin s'étend en longueur, tel qu'observé dans une vue frontale montrant ses faces inclinées 42, 43, selon une portion de couronne circulaire (figure 3) sur une soixantaine de degrés environ, de sorte que ces faces inclinées sont constituées par des portions de surfaces coniques. Les faces inclinées 42, 43 s'étendent sur une largeur sensiblement égale à celle des surfaces coniques 31, 32 des tubes de manoeuvre 21, 22. Sur la face de base 41 de chaque coin 40, fait saillie perpendiculairement un pion 45 de diamètre un peu inférieur à la largeur des fentes 34 de la couronne 33. Les coins sont disposés dans le corps 2 de façon que leur pion 45 s'étende dans une fente 34 de la couronne, parallèlement à l'axe 4 du mandrin, et que leurs faces inclinées 42, 43 soient respectivement en contact avec les surfaces coniques 32, 31 des tubes de manoeuvre 22, 21. La face de base 41 des coins 40 prend appui sur la surface d'extrémité voisine de la couronne 33.

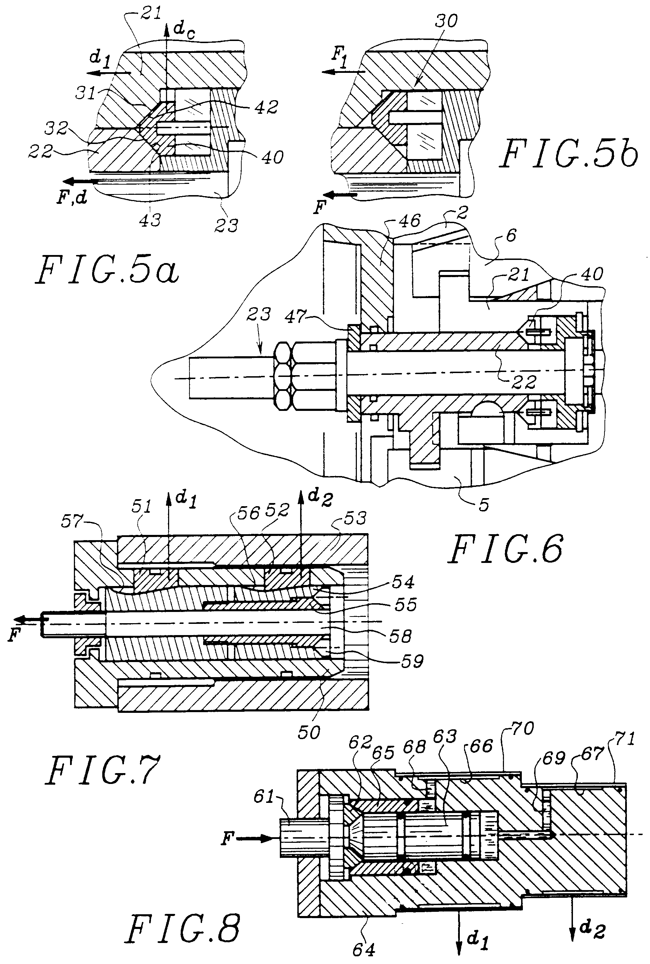

Un plateau 46 est fixé contre une face arrière du corps de mandrin 2. Il est traversé à coulissement par une extrémité arrière du tube de manoeuvre intérieur 22 éloignée de la surface conique 32 de celui-ci. Par ailleurs, la tige de commande 23 porte une collerette 47 faisant face à ladite extrémité arrière du tube de manoeuvre intérieur 22 et agencée pour pouvoir venir en butée périphériquement contre le plateau 46 (figure 5). La tige de commande 23 est reliée, à l'extérieur du corps de mandrin 2, à des moyens d'entraînement en translation connus en eux-mêmes et non visibles sur les figures, par exemple un vérin pneumatique ou hydraulique.

Les faces inclinées 42, 43 de chaque coin 40 font respectivement un angle $A_2$ et $A_1$ (figure 2) avec un plan longitudinal médian de celui-ci. Les surfaces coniques 31, 32 des tubes de manoeuvre 21, 22 présentent la même inclinaison que la face inclinée du coin avec laquelle elles sont en contact respectivement. La tige de commande 23 constitue, avec les coins 40 et les tubes de manoeuvre 21, 22, un dispositif de transmission d'efforts et de mouvements dans lequel la tige de commande constitue un "émetteur", les coins constituent des "compensateurs, et les tubes de manoeuvre constituent des "récepteurs". L'émetteur est l'élément moteur qui agit, par l'intermédiaire des compensateurs, sur les éléments à commander que sont les récepteurs. Un effort F étant appliqué à la tige de commande 23, des efforts résultants $F_1$ et $F_2$ sont transmis aux tubes de manoeuvre 21, 22 respectivement, selon les sens indiqués par les flèches de la figure 2, à savoir que ces efforts sont coaxiaux au corps 2 et dirigés dans un sens opposé à la pièce 15 à serrer. L'effort $F_1$ transmis au tube de manoeuvre extérieur 21 l'est par l'ensemble des faces inclinées 43 des six coins 40 qui le communiquent à la surface conique 31 de ce tube de manoeuvre. Il en est de même pour le tube de manoeuvre intérieur 22 vis-à-vis des faces inclinées 42 des coins. Quant aux déplacements engendrés, ils sont imposés par le système à commander, à savoir par le mandrin 1 et la pièce à serrer 15 : déplacement d pour la tige de commande, $d_1$ et $d_2$ pour les tubes de manoeuvre 21, 22. On notera que le dispositif de transmission permet avantageusement de commander, à partir d'un seul organe de commande, au moins deux fonctions mécaniques distinctes.

L'identité ou la différence entre les valeurs des forces $F_1$, $F_2$ est dictée par les angles $A_1$ et $A_2$. Plus précisément, la force $F_1$ est proportionnelle à l'angle $A_1$, et la force $F_2$ proportionnelle à l'angle $A_2$. En ce qui concerne les déplacements $d_1$, $d_2$, bien qu'ils soient imposés par le système à commander, ils varient en sens inverse des angles $A_1$ et $A_2$, c'est-à-dire par exemple que lorsque l'angle $A_1$ augmente, le déplacement $d_1$ diminue.

Les angles $A_1$ et $A_2$ sont théoriquement compris entre 0 et 90°, en pratique entre 6° et 84° pour respecter les limites de coincement. Ils sont ici égaux à 45°, de sorte que $F_1$ est égale à $F_2$, c'est-à-dire à $\frac{F}{2}$, si l'on néglige les frottements. Cette valeur de 45° procure la meilleure compensation possible en ce qui concerne les déplacements mutuels des deux tubes de manoeuvre 21, 22.

Sur la figure 5a, le mandrin est dans un état dans lequel les surfaces coniques 31, 32 des tubes de manoeuvre 21, 22 occupent la même position axiale et les coins 40 occupent une position radiale médiane dans laquelle leur plan longitudinal médian est aligné avec la surface intérieure du tube de manoeuvre extérieur 21 : les faces inclinées 42, 43 de chaque coin sont en contact surfacique intégral avec les surfaces coniques 31, 32 respectivement. Un effort F est appliqué sur la tige de commande 23 et va engendrer, le tube de manoeuvre intérieur 22 étant considéré fixe, un déplacement axial $d_1$ du tube de manoeuvre extérieur 21, c'est-à-dire un déplacement radial $d_c$ de chaque coin 40 vers l'extérieur, soit encore un déplacement axial d de la tige de commande 23. Le déplacement radial du coin 40 s'effectue par glissement de ses faces inclinées 42, 43 sur les surfaces coniques 31, 32, jusqu'à une position représentée sur la figure 5b dans laquelle il bute contre la portion de surface intérieure 30 du tube de manoeuvre extérieur 21. Dans cette position, une force $F_1$ est transmise au tube de manoeuvre extérieur 21.

En utilisation, le mandrin se trouve dans un état initial desserré (figure 6) dans lequel la tige de commande 23 est dans une position extrême avant, c'est-à-dire la plus proche de la pièce à serrer 15 et bute, par sa collerette 47, contre le couvercle 46 du corps de mandrin 2. Les coins 40 se trouvent dans une position radiale médiane et les surfaces coniques 31, 32 des tubes de manoeuvre 21, 22 occupent la même position axiale. Les tubes de manoeuvre 21, 22 et les bras 5, 6 sont dans une position extrême avant.

Après actionnement de la tige de commande 23, le mandrin se trouve dans la position de la figure 1 dans laquelle il serre la pièce 15. La tige de commande 23 est dans une position extrême arrière : en effet, les bras 5, 6 prennent appui sur la pièce à serrer 15 de sorte qu'ils ne peuvent plus reculer, ni les tubes de manoeuvre 21, 22 qui y sont attelés ; par ailleurs, la tige de commande, attelée au tube de manoeuvre extérieur 21 par le circlips 35, ne peut pas reculer non plus. Quant aux coins 40, ils occupent la position radiale la plus extérieure représentée en figure 5b.

Il y a lieu de noter que, sur la figure 5b, les faces inclinées 42, 43 du coin 40 ne sont plus en contact surfacique avec les surfaces coniques 31, 32 des tubes de manoeuvre, mais seulement selon deux lignes en raison du décalage axial entre elles. Pour transmettre des efforts très importants, on pourra préférer utiliser des coins dont les faces inclinées sont rigoureusement planes. Un tel coin pourra avoir, tel qu'observé dans la vue de face de la figure 5c, un contour en forme de trapèze. Quant aux surfaces d'extrémité des tubes de manoeuvre, elles devront présenter en correspondance six facettes planes réparties autour de l'axe 4 du mandrin, chaque facette ayant un contour sensiblement identique à celui précité du coin. Dans un tel dispositif, le contact entre les facettes des tubes de manoeuvre et les faces inclinées des coins est toujours surfacique, quelle que soit leur position axiale mutuelle.

A l'inverse, dans le cas où les efforts à transmettre sont moins importants que dans le cas des figures 1 à 5b, le coin de la figure 4 pourra être remplacé par le cône de la figure 5d présentant une symétrie de révolution autour d'un axe 80. Dans ce cas, les surfaces coniques 31, 32 des tubes de manoeuvre 21, 22 coopèrent avec la surface latérale des cônes selon deux lignes, quelle que soit leur position axiale mutuelle.

Enfin dans le cas où les efforts à transmettre sont encore moins importants que dans le cas des cônes de la figure 5d, on pourra remplacer ces cônes par des billes sphériques 81 (figure 5e) qui sont en contact ponctuel avec les surfaces coniques 31, 32 des tubes de manoeuvre.

La variante de la figure 7 représente un mandrin comportant un corps 50 tubulaire dans l'épaisseur duquel sont montés à coulissement radial deux poussoirs 51, 52 destinés à coopérer avec deux portions de diamètre différent d'une pièce tubulaire 53 entourant le corps 50 coaxialement. Deux tubes de manoeuvre extérieur 54 et intérieur 55 sont prévus, qui possèdent chacun une surface de came extérieure 56, 57 agencée pour coopérer par glissement avec les poussoirs 51, 52. Une traction F sur une tige de commande 58, équipée comme précédemment d'une pluralité de coins périphériques 59, permet de transmettre un même effort aux poussoirs 51, 52 se déplaçant selon des courses radiales différentes.

La figure 8 représente une version fluidique du mandrin de la figure 7. La tige de commande 61 pourvue de ses coins 62 attaque deux "récepteurs" dont un piston de manoeuvre intérieur 63 monté à coulissement axial dans un corps de mandrin 64, et un tube de manoeuvre extérieur 65 entourant le piston. Les deux récepteurs 63, 65 compriment un fluide vers deux chambres fluidiques 66, 67 tubulaires, pratiquées dans la surface extérieure du corps 64 et reliées aux récepteurs par des conduits fluidiques 68, 69. Chaque chambre fluidique 66, 67 est fermée par une garniture tubulaire 70, 71 réalisée à partir d'une feuille métallique souple. Sous la poussée F, la tige de commande 61 communique aux récepteurs un effort conduisant les garnitures tubulaires 70, 71 à se galber radialement vers l'extérieur, de façon différenciée.

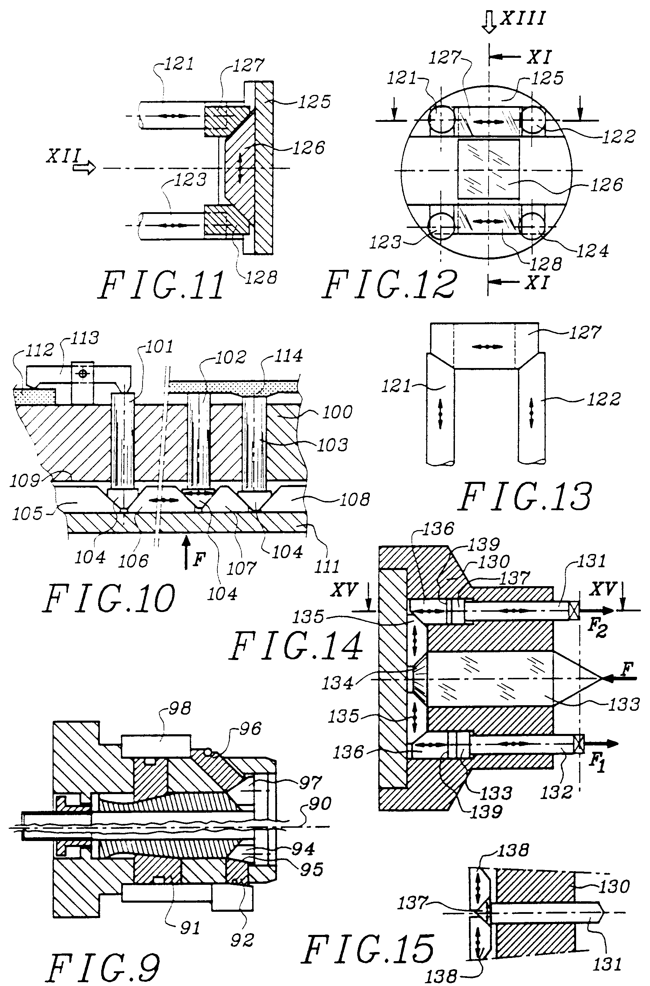

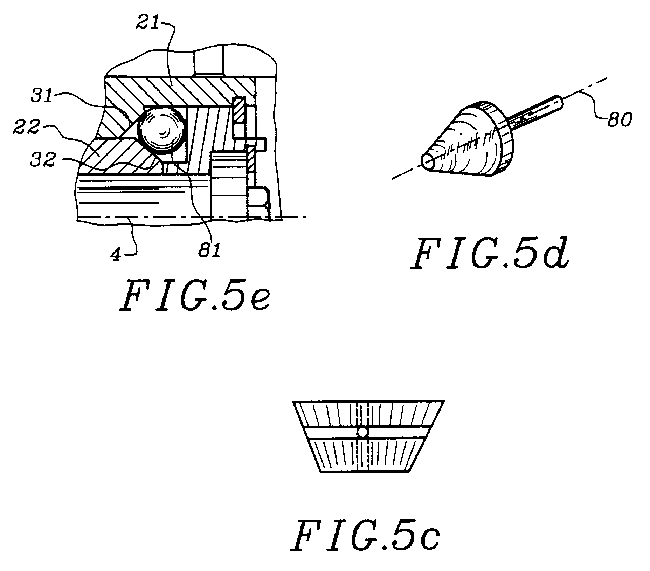

La partie de la figure 9 située sous l'axe de mandrin 90 constitue une autre variante de réalisation de la figure 7 dans laquelle un poussoir 91 est commandé par un tube de manoeuvre 93 à surface de came, tandis que l'autre poussoir 92 est commandé directement par les coins 94. A cet effet, chaque coin présente une face inclinée 95 selon un angle faible (15 à 20° par exemple) qui coopère directement avec le poussoir 92 à déplacement radial.

La partie supérieure de la figure 9 est une variante de la partie inférieure et s'en distingue en ce que le poussoir 96 commandé directement par les coins 97 coulisse selon un trajet incliné par rapport à l'axe 90 du mandrin, permettant de bloquer en position axiale une pièce à maintenir 98.

Sur la figure 9 décrite ci-dessus, il peut être prévu plusieurs poussoirs 91, 92, 96 répartis périphériquement autour de l'axe 90 du mandrin, chaque poussoir tel que 92, 96 étant actionné par un coin propre 94, 97.

La figure 10 illustre un dispositif de maintien de pièces comportant plusieurs tiges de maintien 101 à 103 parallèles entre elles et disposées selon une rangée, qui traversent un corps 100 jusqu'à s'étendre dans une rainure 109 pratiquée dans celui-ci. La rainure contient une première rangée de coins 105 à 108 intercalée avec une seconde rangée de coins 104 montés tête-bêche par rapport aux premiers de façon que leurs faces inclinées respectives soient en contact mutuel. Les extrémités des tiges de maintien prennent appui sur la face de base des seconds coins. L'ensemble des coins 105 à 108 prennent appui par leur face de base sur une plaque de commande commune 111. Dans cet exemple, la tige de maintien 101 bloque une pièce 112 par actionnement d'un levier 113, tandis que les tiges 102, 103 maintiennent une pièce commune 114. Un effort F appliqué sur la plaque de commande 111 est transmis aux pièces 112, 114 après rattrapage de chacun des jeux existant entre les premiers coins 105 à 108 et les seconds coins 104. En variante, le dispositif comprend plusieurs rangées de tiges de maintien disposées autour d'un axe central, toutes les tiges faisant saillie radialement vers l'extérieur, chaque rangée de tige étant commandée par une rangée de coins. En variante, les coins 104 coopérant avec les tiges 101 à 103 sont remplacés par des billes.

Sur les figures 11 à 13, quatre tiges de maintien 121 à 124, disposées parallèlement les uns aux autres aux quatre sommets d'un rectangle, sont commandées à partir d'une même plaque de commande 125 perpendiculaire. Un coin principal 126 est monté à coulissement selon une première direction et coopère par deux faces inclinées avec deux coins secondaires 127, 128 montés à coulissement perpendiculairement à cette première direction. A leur tour, les coins secondaires coopèrent par deux face inclinées avec deux tiges de maintien : quatre compensations de mouvement de tiges de maintien s'effectuent donc simultanément.

Enfin, sur les figure 14 et 15, un corps 130 loge à coulissement au moins deux tiges de maintien 131, 132 parallèles entre elles et, entre celles-ci, une tige de commande 133 parallèle aux précédentes, coopérant par une extrémité avec un coin 134, lui-même coopérant avec deux coins à coulissement transversal 135. Chaque coin à coulissement transversal 135 coopère avec un coin à coulissement longitudinal 136 situé dans le prolongement de l'une des tiges de maintien 131, 132. Entre ce coin à coulissement longitudinal 136 et l'extrémité voisine de la tige de maintien 131, 132, sont disposés trois coin à coulissement latéral, à savoir un coin central 137 dont une face de base est en contact avec l'extrémité de la tige de maintien, et deux coins adjacents 138 disposés de part et d'autre du coin central 137. Chaque coin à coulissement longitudinal 136 coopère avec une face de base des coins adjacents 138 par une face droite 139. Il s'agit donc d'un dispositif de renvoi à 180° dans lequel un effort F appliqué sur la tige de commande 133 se décompose en deux efforts $F_1$ et $F_2$ sur les tiges de maintien 131, 132, qui sont parallèles à F mais de sens opposé à lui.

Dans les exemples précités, et selon les efforts à transmettre, tout ou partie des coins pourront être remplacés soit par des cônes, soit par des billes.

## Revendications

1. Dispositif de transmission différentielle de force et de course à partir de moyen moteurs (23) vers des premiers (21) et second (22) moyens à commander, comprenant des moyens de compensation (40) interposés entre lesdits moyens moteurs et lesdits moyens à commander et agencés pour permettre, soit de transmettre auxdits moyens à commander des forces d'intensité différente, soit de leur faire exécuter des courses différentes, lesdits moyens moteurs (23) présentant une surface de transmission (33) par laquelle ils communiquent une force (F) auxdits moyens de compensation (40, 81), caractérisé en ce que ceux-ci comprenant au moins un bloc (40, 81) monté mobile le long de ladite surface de transmission et prenant appui sur celle-ci, lesdits premiers (21) et seconds (22) moyens à commander présentent respectivement deux surfaces de transmission (31, 32) juxtaposées l'une à l'autre, chacune présentant, par rapport à la surface de transmission (33) des moyens moteurs, une orientation déterminée qui est fonction de la force ($F_1$, $F_2$) à transmettre respectivement auxdits premiers et seconds moyens à commander, ledit bloc (40) étant en contact avec chacune des surfaces de transmisssion (31, 32) des moyens à commander (21, 22).

2. Dispositif selon la revendication 1, dans lequel ledit bloc (40) présente une première surface (41) de coopération avec ladite surface de transmission (33) des moyens moteurs et une seconde surface (42, 43) de coopération avec les surfaces de transmission (31, 32) des moyens à commander, ladite seconde surface présentant, par rapport à la première surface, la même orientation que celle des surfaces de transmission (31, 32) des moyens à commander.

3. Dispositif selon la revendication 2, dans lequel lesdits moyens moteur comprennent un disque (33) présentant plusieurs fentes radiales (34) réparties autour d'un axe de celui-ci et débouchant sur une face frontale du disque, et plusieurs blocs (40) portant, sur leur première surface (41), un pion saillant (45), les blocs étant disposés en face des fentes, de façon que leur première surface prenne appui sur ladite face frontale du disque et que leur pion s'étende dans la fente.

4. Dispositif selon la revendication 3, dans lequel lesdits premiers moyens à commander comprennent un tube (22)coaxial au disque (33) et mobile le long de l'axe, qui présente, à une extrémité, une surface (32) agencée pour coopérer avec les secondes surfaces (42) de l'ensemble des blocs (40).

5. Dispositif selon la revendication 4, dans lequel ledit tube (22) présente une surface extérieure dont le diamètre varie le long de l'axe de façon à former un chemin de came (57) coopérant avec un poussoir (51) monté mobile radialement en face du chemin de came (57).

6. Dispositif selon l'une quelconque des revendications 3 à 5, dans lequel lesdits seconds moyens à commander comprennent plusieurs poussoirs (92, 96) s'étendant sensiblement dans plusieurs plans diamétraux autour de l'axe du disque (33) en formant un angle avec cet axe, lesdits poussoirs étant montés mobiles en translation et coopérant respectivement, par une surface d'extrémité, avec lesdites secondes surfaces (43) des blocs (40).

7. Dispositif selon la revendication 1 ou la revendication 2, dans lequel lesdits moyens de compensation comprennent des premiers blocs (105 à 108) disposés selon une rangée dans une rainure et des seconds blocs (104) imbriqués avec eux de façon qu'ils coopèrent mutuellement, une pluralité de tiges (101 à 103) s'étendant transversalement à la rainure et coopérant respectivement par une extrémité avec lesdits seconds blocs (104).

8. dispositif selon la revendication 7, dans leqquel lesdits moyens à commander sont constitués par lesdites tiges (101 à 103), lesdits moyens moteurs coopérant simultanément avec tous les premiers blocs (105 à 108).

9. Dispositif selon la revendication 7, dans lequel lesdits moyens moteurs sont constitués par l'une (133) desdites tiges, les moyens à commander étant constitués par l'ensemble des autres tiges (131, 132).

10. Dispositif selon la revendication 2, qui comprend un bloc principal (126) monté à coulissement selon un premier axe, dont ladite première surface coopère avec les moyens moteurs et dont la seconde surface coopère respectivement avec les premières surfaces de deux blocs secondaires (127, 128) montés à coulissement selon des second et troisième axes parallèles entre eux et perpendiculaires audit premier axe, la seconde surface de chaque bloc secondaire coopérant respectivement avec les extrémités de deux tiges (121, 122 ; 123, 124) constituant lesdits moyens à commander.

**Claims**

1. Device for the differential transmission of force and of travel from driving means (23) to first (21) and second (22) means to be controlled, comprising compensation means (40) interposed between the said driving means and the said means to be controlled and arranged so as to allow either the transmission to the said means to be controlled of forces of different strength, or them to be given different travels, the said driving means (23) having a transmission surface (33) by means of which they impart a force (F) to the said compensation means (40, 81), characterized in that these compensation means comprise at least one block (40, 81) mounted so that it can move along the said transmission surface and bearing thereon, the said first (21) and second (22) means to be controlled respectively have two transmission surfaces (31, 32) juxtaposed with one another, each having, with respect to the transmission surface (33) of the driving means, a given orientation which is a function of the force $(F_1, F_2)$ to be transmitted respectively to the said first and second means to be controlled, the said block (40) being in contact with each of the transmission surfaces (31, 32) of the means to be controlled (21, 22).

2. Device according to Claim 1, in which the said block (40) has a first surface (41) for interacting with the said transmission surface (33) of the driving means and a second surface (42, 43) for interacting with the transmission surfaces (31, 32) of the means to be controlled, the said second surface having, with respect to the first surface, the same orientation as that of the transmission surfaces (31, 32) of the means to be controlled.

3. Device according to Claim 2, in which the said driving means comprise a disc (33) having several radial slots (34) distributed about an axis thereof and emerging on a front face of the disc, and several blocks (40) carrying a projecting peg (45) on their first surface (41), the blocks being arranged facing the slots in such a way that their first surface bears against the said front face of the disc and that their peg extends into the slot.

4. Device according to Claim 3, in which the said first means to be controlled comprise a tube (22) coaxial with the disc (33) and able to move along the axis, which, at one end, has a surface (32) designed to interact with the second surfaces (42) of all of the blocks (40).

5. Device according to Claim 4, in which the said tube (22) has an outer surface the diameter of which varies along the axis in such a way as to form a cam surface (57) interacting with a follower (51) mounted so that it can move radially opposite the cam surface (57).

6. Device according to any one of Claims 3 to 5, in which the said second means to be controlled comprise several followers (92, 96) extending substantially in several diametral planes about the axis of the disc (33), while forming an angle with this axis, the said followers being mounted so they can move in terms of translation and interacting respectively, via an end surface, with the said second surfaces (43) of the blocks (40).

7. Device according to Claim 1 or Claim 2, in which the said compensation means comprise first blocks (105 to 108) arranged in a row in a groove and second blocks (104) nested between them in such a way that they interact with one another, a number of rods (101 to 103) extending transversely to the groove and interacting respectively via one end with the said second blocks (104).

8. Device according to Claim 7, in which the said means to be controlled consist of the said rods (101 to 103), the said driving means interacting simultaneously with all the first blocks (105 to 108).

9. Device according to Claim 7, in which the said driving means consist of one (133) of the said rods, the means to be controlled consisting of all the other rods (131, 132).

10. Device according to Claim 2, which comprises a main block (126) mounted so that it can slide along a first axis, the said first surface of which interacts with the driving means and the second surface of which interacts respectively with the first surfaces of two secondary blocks (127, 128) mounted so that they can slide along second and third axes which are parallel to each other and perpendicular to the said first axis, the second surface of each secondary block interacting respectively with the ends of two rods (121, 122; 123, 124) constituting the said means to be controlled.

**Patentansprüche**

1. Vorrichtung für die differentielle Kraft- und Bewegungsübertragung anhand von Antriebsmitteln (23) in Richtung auf erste (21) und zweite (22) zu betätigende Mittel mit Kompensationsmitteln (40), die zwischen den genannten Antriebsmitteln und den genannten zu betätigenden Mitteln angeordnet sind und so eingerichtet sind, daß sie in der Lage sind, an die genannten zu betätigenden Mittel entweder Kräfte unterschiedlicher Stärke zu übertragen, oder sie unterschiedliche Bewegungen ausführen zu lassen, wobei die genannten Antriebsmittel (23) eine Übertragungsfläche (33) aufweisen, anhand welcher sie eine Kraft (F) an die genannten Kompensationsmittel (40, 81) übertragen, dadurch gekennzeichnet, daß diese mindestens einen Keil (40, 81) beinhalten, der beweglich entlang der genannten Übertragungsfläche montiert ist und sich auf diese stützt, wobei die genannten ersten (21) und zweiten (22) zu betätigenden Mittel jeweils zwei Kraftübertragungsflächen (31, 32) aufweisen, die übereinanderliegen und jede von ihnen im Verhältnis zur Kraftübertragungsfläche (33) der Antriebsmittel eine Ausrichtung aufweist, die von der Kraft (F1, F2) abhängig ist, die an die genannten ersten und zweiten zu betätigenden Mittel übertragen werden soll, wobei der genannte Keil (40) mit jeder der Übertragungsflächen (31, 32) der zu betätigenden Mittel (21, 22) in Kontakt steht.

2. Vorrichtung gemäß Patentanspruch 1, bei der der genannte Keil (40) eine erste Fläche (41) für das Zusammenwirken mit der genannten Übertragungsfläche (33) der Antriebsmittel und eine zweite Fläche (42, 43) für das Zusammenwirken mit den Übertragungsflächen (31, 32) der zu betätigenden Mittel aufweist, wobei die genannte zweite Fläche im Verhältnis zur ersten Fläche dieselbe Ausrichtung aufweist, wie die Übertragungsflächen (31, 32) der zu betätigenden Mittel.

3. Vorrichtung gemäß Patentanspruch 2, bei der die genannten Antriebsmittel eine Scheibe (33) beinhalten, die mehrere radial verlaufende Schlitze (34) aufweist, die um eine Achse herum verlaufen und auf der Vorderseite der Scheibe enden, und mehrere Keile (40), die auf ihren ersten Fläche (41) einen hervorstehenden Zapfen (45) tragen, wobei die Keile gegenüber den Schlitzen dergestalt angeordnet sind, daß ihre erste Fläche auf der genannten Vorderseite der Scheibe aufliegt und ihr Zapfen in den Schlitz hineinragt.

4. Vorrichtung gemäß Patentanspruch 3, bei der die genannten ersten zu betätigenden Mittel ein Rohr (22) beinhalten, das koaxial zur Scheibe (33) verläuft und entlang der Achse beweglich ist, wobei dieses Rohr an einem Ende eine Fläche (32) aufweist, die so eingerichtet ist, daß sie mit den zweiten Flächen (42) der Keile (40) zusammenwirkt

5. Vorrichtung gemäß Patentanspruch 4, bei der das genannte Rohr (22) eine Außenfläche aufweist, deren Durchmesser entlang der Achse variiert, so daß ein Nockenkanal (57) gebildet wird, der mit einem Stößel (51) zusammenwirkt, der radial beweglich gegenüber dem Nockenkanal (57) montiert ist.

6. Vorrichtung gemäß irgendeines der Patentansprüche 3 bis 5, bei der die genannten zweiten zu betätigenden Mittel mehrere Stößel (92, 96) beinhalten, die sich in mehreren diametral zu einander verlaufenden Ebenen um die Achse der Scheibe (33) erstrecken und dabei mit dieser Achse einen Winkel bilden, wobei die genannten Stößel seitlich beweglich montiert sind und jeweils anhand einer Endfläche mit den genannten zweiten Flächen (43) der Keile (40) zusammenwirken.

7. Vorrichtung gemäß Patentanspruch 1 oder 2, bei der die genannten Kompensationsmittel erste Keile (105 bis 108) beinhalten, die in einer Reihe in einer Nut der zweiten Keile (104) angeordnet sind und mit ihnen so verzahnt sind, daß sie mit einer Reihe von Stäben (101 bis 103) zusammenwirken, die sich quer zur Nut erstrecken und jeweils mit ihrem einen Ende mit den genannten zweiten Keilen (104) zusammenwirken.

8. Vorrichtung gemäß Patentanspruch 7, bei der die genannten zu betätigenden Mittel aus den genannten Stäben (101 bis 103) bestehen, wobei die genannten Antriebsmittel gleichzeitig mit allen ersten Keilen (105 bis 108) zusammenwirken.

9. Vorrichtung gemäß Patentanspruch 7, bei der die genannten Antriebsmittel aus einem der genannten Stäbe (133) bestehen und die zu betätigenden Mittel aus sämtlichen anderen Stäben (131, 132) bestehen.

10. Vorrichtung gemäß Patentanspruch 2, die einen Hauptkeil (126) beinhaltet, der in Richtung einer ersten Achse verschiebbar montiert ist, wobei die genannte erste Fläche mit den Antriebsmitteln und die zweite Fläche jeweils mit den ersten Flächen der beiden Sekundärkeile (127, 128) zusammenwirkt, die verschiebbar in der zweiten und dritten parallel zueinander verlaufenden und rechtwinklig zur genannten ersten Achse montiert ist, wobei die zweite Fläche jedes Sekundärkeils jeweils mit den Enden von zwei Stäben (121, 122; 123, 124) zusammenwirkt, die die genannten zu betätigenden Mittel bilden.

FIG.1

FIG.2

FIG.3

FIG.4

*FIG.5a*

*FIG.5b*

*FIG.6*

*FIG.7*

*FIG.8*

FIG.11

FIG.12

FIG.13

FIG.10

FIG.14

FIG.9

FIG.15

FIG.5e

FIG.5d

FIG.5c